# EUROPEAN PATENT SPECIFICATION

(11) **EP 1 950 711 B1**
(45) Date of publication and mention of the grant of the patent: **19.05.2010**
(21) Application number: 07001925.2
(22) Date of filing: 29.01.2007
(51) Int. Cl.: G07C 9/00, B60R 25/04, B60R 16/023, E05B 65/12

(54) **Anti-theft system with clip-on wireless keypad**
Diebstahlsicherungssystem mit drahtloser Klemmtastatur
Système antivol pour automobile avec clavier sans fil fixable

(43) Date of publication of application: 30.07.2008
(73) Proprietor: Chen, Tse-Hsing, Chung-Ho City, Taipei Hsien (TW)
(72) Inventor: Chen, Tse-Hsing, Chung-Ho City, Taipei Hsien (TW)
(74) Representative: Kilian, Helmut

(56) References cited:
- EP-A2- 0 950 784
- WO-A-96/03563
- DE-U1- 20 300 984
- US-A- 3 544 804

## Description

### FIELD OF THE INVENTION

The present invention relates to a novel auto antitheft system, and more particularly to a humanized antitheft system having a wireless keypad that may be clipped to a door edge of all versions of cars via a clip provided on a rear side of the wireless keypad, so that a user may conveniently use the wireless keypad just beside a car to enter and transmit a code to a main controller mounted in the car to release or enable the antitheft system.

### BACKGROUND OF THE INVENTION

An automobile is an important traffic means in the modern society. It is a good thing to buy and own a car, and to conveniently go any place by driving. However, almost all the car owners have the bothersome problem of guarding the car against theft. A car thief would try different ways to steal a car, such as destroying the car lock, preparing a master key, destroying the door handle, driving away a car having the key left therein, etc. According to official investigations, an experienced thief needs only five minutes to steal a car. However, most car thieves would not take a risk and spend a lot of time to steal a car having an antitheft system mounted thereon.

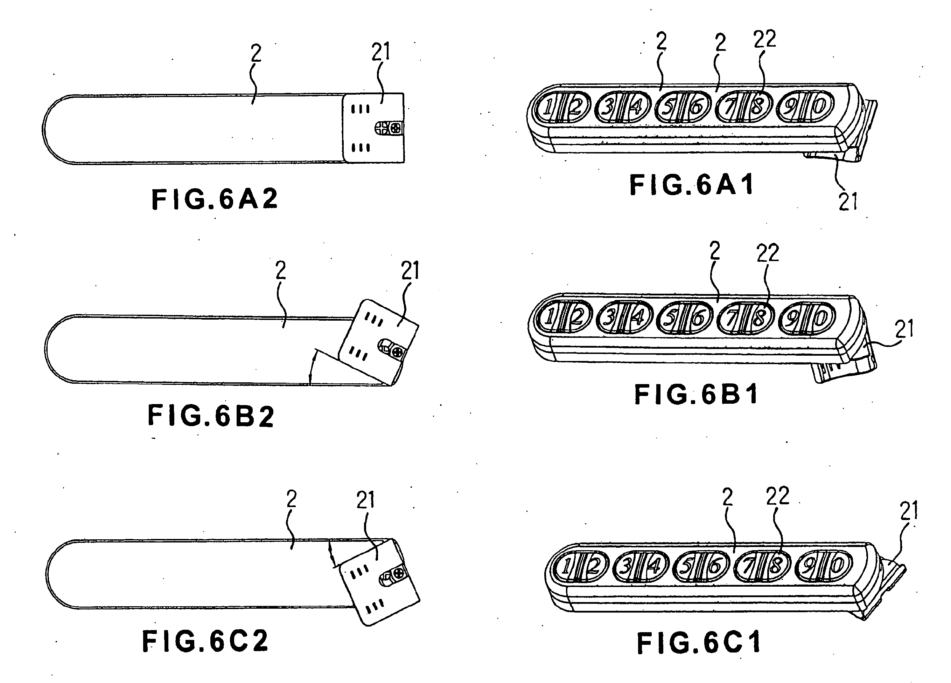

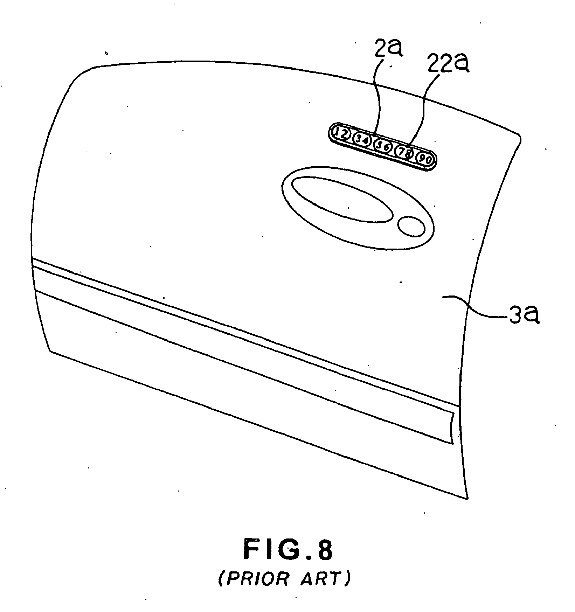

Therefore, there are various types of auto antitheft systems developed and available in the market, and these antitheft systems generally produce a deterrent effect by emitting a warning sound at the instant the car is invaded by a thief. The currently available auto antitheft systems are different in their performance and effect. The auto antitheft systems and remote-controlled power locks in early stages are generally controlled using a remote controller. However, an advanced original equipment antitheft system for car as shown in Fig. 6 has been developed to save a user the trouble of carrying a remote controller or carelessly leaving the remote controller or a key in the car. In the antitheft system shown in Fig. 8, a numeral keypad 2a is provided near a door handle 3a. A user may conveniently enter a code by pressing numbered keys 22a on the keypad 2a to release or enable the auto antitheft system without the need of carrying the remote controller. The auto antitheft system with the keypad is therefore a convenient, advanced, and humanized design.

While it is very easy to provide such keypad on the door of a car as original equipment thereof, it is quite troublesome to additionally mount the keypad on the door of a car as an after-service because it is necessary to drill a hole on the car door for mounting the keypad, and then electrically connect the keypad to a main controller mounted in the car. And, most car owners are not willing to drill holes on their new cars for mounting the keypad.

A currently available solution best for this problem is to bond a wireless keypad to a car door, so as to avoid drilling on the car door and therefore attract more customers to mount this type of antitheft system. The wireless keypad is received in a case and internally provided with a key circuit, a battery, and a wireless transmission circuit. However, the wireless keypad bonded to the car door tends to be easily stolen by a thief or separated from the car door due to car washing or vibration in driving.

An antitheft device with the features the preamble of claim 1 is known from EP-A-0 950 784 A2.

It is therefore tried by the inventor to develop an antitheft system with clip-on wireless keypad to overcome the above-mentioned problems.

### SUMMARY OF THE INVENTION

An antitheft system with clip-on wireless keypad according to the present invention includes a main controller mounted in a car for controlling an overall operation of the antitheft system, and a wireless keypad provided on a front side with numbered keys and on a rear side with a clip. The wireless keypad may be attached to a car door edge of all versions of different brands of cars via the clip without the risk of separating from the door easily. The wireless keypad also allows a user to enter and transmit a code to the main controller to release or enable the antitheft system just beside the car, and is therefore a humanized design.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein
Fig. 1 is a block diagram of an antitheft system with clip-on wireless keypad according to the present invention;
Fig. 2A is a front perspective view of a first embodiment of the clip-on wireless keypad included in the antitheft system of the present invention;
Fig. 2B is a rear perspective view of the clip-on wireless keypad of Fig. 2A;
Fig. 3 shows the mounting of the clip-on wireless keypad of Fig. 2 to a car door edge;
Fig. 3A is a partially enlarged view of Fig. 3;
Fig. 4A is a front perspective view of a second embodiment of the clip-on wireless keypad included in the antitheft system of the present invention;
Fig. 4B is a side perspective view of the clip-on wireless keypad of Fig. 4A;

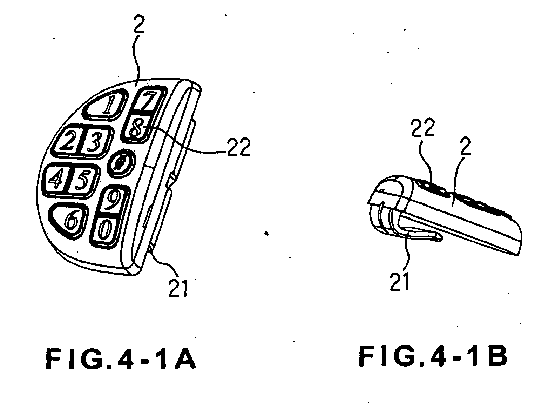

Fig. 4-1A is a front perspective view of a third embodiment of the clip-on wireless keypad included in the antitheft system of the present invention;
Fig. 4-1B is a side perspective view of the clip-on wireless keypad of Fig. 4-1A;

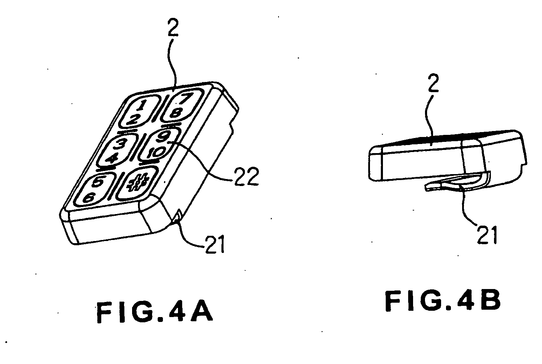

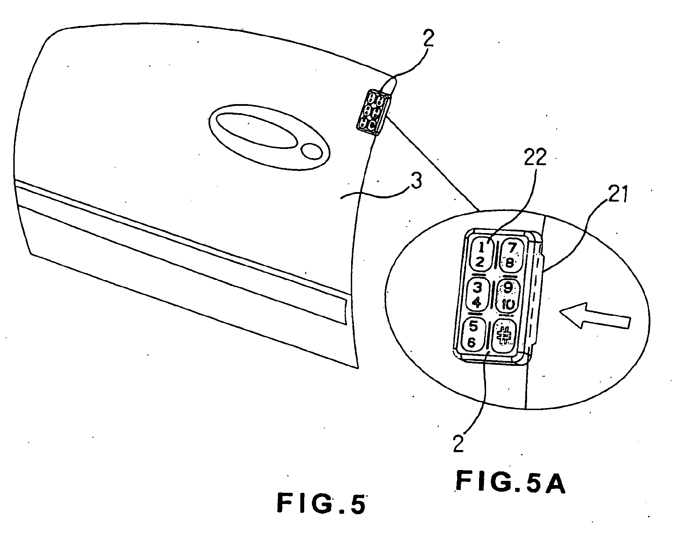

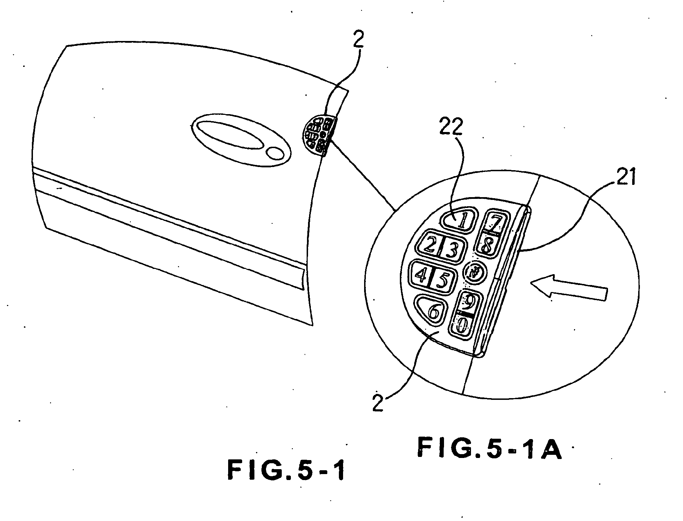

Fig. 5 shows the mounting of the clip-on wireless keypad of Fig. 4 to a car door edge;
Fig. 5A is a partially enlarged view of Fig. 5;
Fig. 5-1 shows the mounting of the clip-on wireless keypad of Fig. 4-1 to a car door edge;
Fig. 5-1A is a partially enlarged view of Fig. 5-1;
Figs. 6A1 and 6A2 are front perspective and rear plan views, respectively, of a fourth embodiment of the clip-on wireless keypad included in the antitheft system of the present invention, wherein the wireless keypad has an angularly adjustable clip;
Figs. 6B1 and 6B2 are front perspective and rear plan views, respectively, showing the clip of the wireless keypad of Figs. 6A1 and 6A2 is turned leftward relative to the wireless keypad by an angle;
Figs. 6C1 and 6C2 are front perspective and rear plan views, respectively, showing the clip of the wireless keypad of Figs. 6A1 and 6A2 is turned rightward relative to the wireless keypad by an angle;

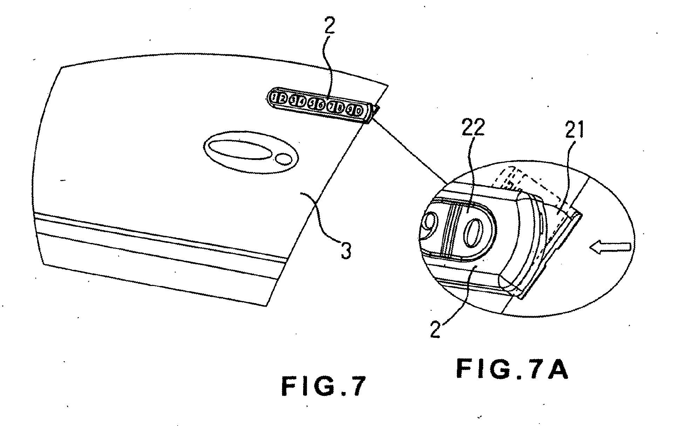

Fig. 7 shows the mounting of the clip-on wireless keypad of Fig. 6 to a car door edge;
Fig. 7A is a partially enlarged view of Fig. 7; and
Fig. 8 shows an original equipment antitheft wireless keypad mounted on a car door.

### DETAILED DESCRIPTION OF THE PREFERRED EMBODIMENTS

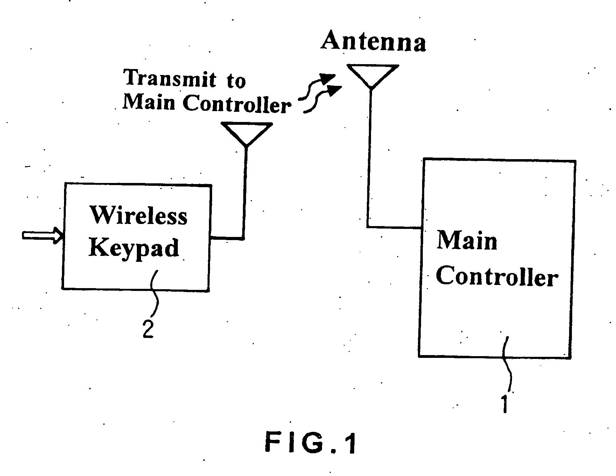

Please refer to Fig. 1 that is a block diagram of an antitheft system with clip-on wireless keypad according to the present invention. As shown, the antitheft system of Fig. 1 includes a main controller 1 mounted in a car for controlling an overall operation of the anti-theft system and the door locks of the car; and a wireless keypad 2 internally provided with a keypad circuit, a battery, and a wireless transmission circuit (not shown), and externally provided with a clip 21 for connecting the wireless keypad 2 to an edge of a car door 3.

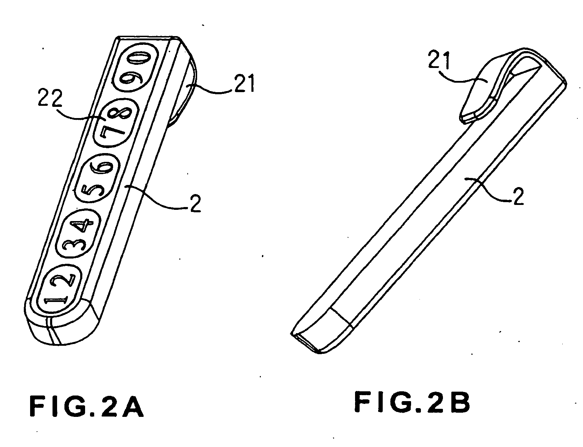

Figs. 2A and 2B are front and rear perspective views, respectively, of the wireless keypad 2 according to a first embodiment of thereof. In this first embodiment, the wireless keypad 2 has an elongate body. On a front side of the elongate body of the wireless keypad 2, there are provided with a plurality of numbered keys 22. The clip 21 is located at a rear side of the wireless keypad 2. Of course, the wireless keypad 2 may be of any other shape. Figs. 4A and 4B are front and side perspective views, respectively, of a second embodiment of the wireless keypad 2 having a short rectangular body with the numbered keys 22 provided on a front side thereof and the clip 21 on a rear side thereof. Figs. 4-1A and 4-1B are front and side perspective views, respectively, of a third embodiment of the wireless keypad 2 having a substantially semicircular body with the numbered keys 22 provided on a front side thereof and the clip 21 on a rear side thereof.

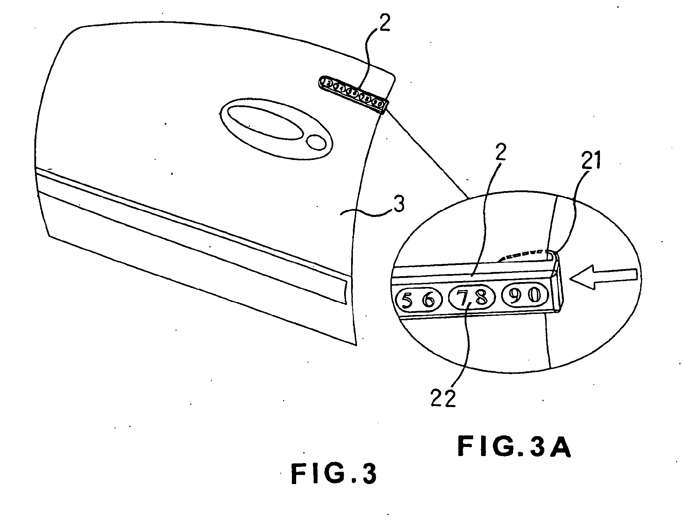

Please refer to Figs. 3, 3A; 5, 5A; and 5-1, 5-1A. The wireless keypad 2 is designed for externally attaching to the edge of the car door 3 via the clip 21, and can therefore be mounted to all versions of different brands of cars without the need of drilling or wiring. To mount the wireless keypad 2 to the car door 3, a bonding agent is first applied to the rear side of the body of the wireless keypad 2 to fixedly bond the wireless keypad 2 to a desired position near the door edge. With the clip 21, the wireless keypad 2 may be more firmly held to the car door 3 without the risk of separating from the car door 3 due to vibration during driving or car washing. Since the clip 21 has a size larger than the gap between front and rear doors or the gap between the door and door frame, it is uneasy to externally detach the clip-on wireless keypad 2 from the car door 3 when door is closed.

Please refer to Figs. 6A1 and 6A2 that are front perspective and rear plan views, respectively, of a fourth embodiment of the wireless keypad 2. In the fourth embodiment, the clip 21 is pivotally turnable so as to be angularly adjustable relative to the car door 3, allowing the wireless keypad 2 to be mounted to different car doors 3 that have different door edge inclinations.

Figs. 6B1 and 6B2 are front perspective and rear plan views, respectively, showing the clip 21 of the clip-on wireless keypad 2 in the fourth embodiment is turned leftward relative to the wireless keypad by an angle; and Figs. 6C1 and 6C2 are front perspective and rear plan views, respectively, showing the clip 21 of the clip-on wireless keypad 2 in the fourth embodiment is turned rightward relative to the wireless keypad by an angle.

Figs. 7 and 7A shows the mounting of the clip-on wireless keypad of the fourth embodiment to a car door edge. As shown, with the turnable clip 21, the wireless keypad 2 may always be mounted to the car door 3 in parallel with a door handle or window frame thereof, so as to maintain the car door 3.

The clip-on wireless keypad 2 together with the main controller 1 may form an antitheft system suitable for all versions of different brands of cars. With the clip-on wireless keypad 2 mounted on the car door 3, a user may conveniently press the predetermined numbered keys 22 to enter and transmit a code to the main controller 1 to release or enable the antitheft system of the present invention just beside the car. Therefore, the antitheft system with clip-on wireless keypad according to the present invention is a humanized design. That is, to enable the antitheft system and lock the car doors, the user needs only to press one or more predetermined keys 22 on the wireless keypad before he or she leaves the car. And, to release the antitheft system and unlock the car doors, the user needs only to press one or more correct number on the wireless keypad 2 just beside the car.

The present invention has been described with some preferred embodiments thereof and it is understood that many changes and modifications in the described embodiments can be carried out without departing from the scope and the spirit of the invention that is intended to be limited only by the appended claims.

## Claims

1. An antitheft system with clip-on wireless keypad (2), comprising a main controller (1) and a wireless keypad; the main controller being mountable in a car for controlling an overall operation of the antitheft system and door locks of the car, whereby a user may press predetermined keys on the wireless keypad to enter and transmit a code signal to the main controller to release or enable the antitheft system; and the wireless keypad works with the main controller to allow a user to release or enable the antitheft system just beside the car without the need of carrying a remote controller, **characterized by** the wireless keypad being provided with a clip for connecting the wireless keypad to an edge of a door (3) of the car, and wherein the clip on the wireless keypad has a size larger than the gap between front and rear doors or the gap between the door and door frame, preventing the wireless keypad from being externally detached from the door edge once the car door is closed.

2. The antitheft system with clip-on wireless keypad as claimed in claim 1, wherein the wireless keypad has an elongate body, and the keys and the clip of the wireless keypad are provided on a front and a rear side, respectively, of the elongate body.

3. The antitheft system with clip-on wireless keypad as claimed in claim 1, wherein the wireless keypad may be of any shape with the keys and the clip respectively provided on a front and a rear side thereof.

4. The antitheft system with clip-on wireless keypad as claimed in claim 1, wherein the clip is pivotally turnable to allow an angular adjustment of the clip relative to the wireless keypad, so that the wireless keypad may be mounted to car doors having different edge inclinations and always be kept in parallel with a door handle or window frame of the car door.

## Patentansprüche

1. Diebstahlsicherungssystem mit drahtlosen Klemmtastatur (2), umfassen ein Hauptsteuergerät (1) und eine drahtlose Tastatur, wobei das Hauptsteuergerät in einem Fahrzeug befestigbar ist zum Steuern eines gesamten Ablaufs des Diebstahlsicherungssystems und der Türschlösser des Fahrzeuges, und wobei ein Benutzer vorbestimmte Tasten auf der drahtlosen Tastatur drücken kann, um einen Signalcode einzugeben und diesen zu dem Hauptsteuergerät zu übertragen, um so das Diebstahlsicherungssystem freizugeben oder zu aktivieren, und wobei die drahtlose Tastatur mit dem Hauptsteuergerät zusammenwirkt, um einem Benutzer die Freigabe oder Aktivierung des Diebstahlsicherungssystems unmittelbar neben dem Fahrzeug zu ermöglichten, ohne dass er eine Fernsteuerung bei sich tragen muss, **dadurch gekennzeichnet, dass** die drahtlose Tastatur mit einer Klemme versehen ist zum Verbinden der drahtlosen Tastatur mit einer Kante einer Tür (3) des Fahrzeuges, und wobei die Klemme an der drahtlosen Tastatur größer ist als der Spalt zwischen den Vorder- und Hintertüren oder der Spalt zwischen der Tür und dem Türrahmen, wodurch vermieden wird, dass die drahtlose Tastatur von außen im verschlossenen Zustand der Fahrzeugtür abgenommen werden kann.

2. Diebstahlsicherungssystem mit drahtlose Klemmtastatur nach Anspruch 1, wobei die drahtlose Tastatur einen länglich ausgebildeten Korpus aufweist und die Tasten und die Klemme der drahtlosen Tastatur jeweils auf einer vorderen und einer hinteren Seite des länglich ausgebildeten Korpus vorgesehen sind.

3. Diebstahlisicherungssystem mit drahtloser Klemmtastatur nach Anspruch 1, wobei die drahtlose Tastatur eine beliebige Form aufweisen kann und die Tasten und die Klemme jeweils auf einer vorderen und einer hinteren Seite vorgesehen sind.

4. Diebstahlsicherungssystem mit drahtloser Klemmtastatur nach Anspruch 1, wobei die Klemme drehbar ist, um eine Winkeleinstellung der Klemme relativ zu der drahtlosen Tastatur vornehmen zu können, so dass die drahtlose Tastatur an Fahrzeugtüren mit unterschiedlichen Randneigungen befestigt und immer parallel zu einem Türgriff oder Fensterrahmen der Fahrzeugtür ausgerichtet werden kann.

## Revendications

1. Système antivol avec clavier sans fil à pince (2), comprenant un contrôleur principal (1) et un clavier sans fil ; le contrôleur principal pouvant être monté dans une voiture pour contrôler un fonctionnement global du système antivol et des serrures de portes de la voiture, moyennant quoi un utilisateur peut appuyer sur des touches prédéterminées sur le clavier sans fil pour entrer et transmettre un signal de code au contrôleur principal pour débloquer ou activer le système antivol, et le clavier sans fil fonctionne avec le contrôleur principal pour permettre à l'utilisateur de débloquer ou d'activer le système antivol juste à côté de la voiture sans avoir besoin de transporter une télécommande, **caractérisé par** le clavier sans fil qui est prévu avec une pince pour raccorder le clavier sans fil à un bord d'une porte (3) de la voiture, et dans lequel la pince sur le clavier sans fil a une plus grande taille que l'espace entre les portes avant et arrière ou l'espace entre la porte et le châssis de porte, empêchant le clavier sans fil de se détacher extérieurement du bord de porte une fois que la porte de la voiture est fermée.

2. Système antivol avec clavier sans fil à pince selon la revendication 1, dans lequel le clavier sans fil a un corps allongé, et les touches et la pince du clavier sans fil sont prévues sur un côté avant et un côté arrière, respectivement, du corps allongé.

3. Système antivol avec clavier sans fil à pince selon la revendication 1, dans lequel le clavier sans fil peut être de n'importe quelle forme avec les touches et la pince respectivement prévues sur son côté avant et son côté arrière.

4. Système antivol avec clavier sans fil à pince selon la revendication 1, dans lequel la pince peut tourner de manière pivotante pour permettre un ajustement angulaire de la pince par rapport au clavier sans fil, de sorte que le clavier sans fil peut être monté sur les portes de voiture ayant des inclinaisons de bord différentes et toujours être maintenu parallèle à une poignée de porte ou au châssis de fenêtre de la porte de voiture.
